# EUROPÄISCHE PATENTSCHRIFT

(11) **EP 3 638 918 B1**
(45) Veröffentlichungstag und Bekanntmachung des Hinweises auf die Patenterteilung: **13.12.2023**
(21) Anmeldenummer: 18735504.5
(22) Anmeldetag: 12.06.2018
(51) Int. Cl.: F16D 65/12

(54) **REIBRINGKÖRPER, REIBRINGSATZ ZUR ANORDNUNG AN DEN RADSTEG EINES SCHIENENRADS, SOWIE SCHIENENRADBREMSE**
FRICTION RING ELEMENT, FRICTION RING SET FOR ARRANGING ON THE WHEEL WEB OF A TRACK WHEEL, AND TRACK WHEEL BRAKE
CORPS DE BAGUE DE FRICTION, ENSEMBLE DE BAGUES DE FRICTION À AGENCER SUR L'ÂME DE ROUE D'UNE ROUE FERROVIAIRE, AINSI QUE FREIN DE ROUE FERROVIAIRE

(30) Priorität: 14.06.2017 DE 202017103551 U
(43) Veröffentlichungstag der Anmeldung: 22.04.2020
(73) Patentinhaber: Faiveley Transport Witten GmbH, 58454 Witten (DE)
(72) Erfinder: STROETMANN, Andreas, 58454 Witten (DE); IMHOF, Philipp, 58454 Witten (DE); MEHLAN, Andreas, 58454 Witten (DE)
(74) Vertreter: RGTH
(86) Internationale Anmeldenummer: PCT/EP2018/065475
(87) Internationale Veröffentlichungsnummer: WO 2018/229043

(56) Entgegenhaltungen:
- EP-A1- 0 062 774
- EP-A1- 1 460 283
- DE-B- 1 175 721
- DE-U1-202009 013 476
- DE-U1-202009 014 768
- DE-U1-202013 103 487
- US-A- 4 281 745
- US-A- 6 032 769

## Beschreibung

Die vorliegende Erfindung betrifft einen Reibringkörper für einen Reibringsatz und einen solchen Reibringsatz zur Anordnung an den Radsteg eines Schienenrads für ein Schienenfahrzeug zur Bildung einer Schienenradbremse und betrifft auch eine solche Schienenbremse.

### Stand der Technik

Die EP 1 460 283 A1 zeigt beispielsweise einen Reibringkörper in Anordnung an dem Radsteg eines Schienenrads für ein Schienenfahrzeug zur Bildung einer Schienenradbremse. Die Reibringkörper sind aus Stahlguss hergestellt und weisen Anformungen auf, die Kühlrippen ausbilden und mit denen die Reibringkörper an der Oberfläche des Radstegs anliegen. Die Anformungen dienen ferner zur Aufnahme von Durchgangsschrauben, um die Reibringkörper unter Hindurchführung der Durchgangsschrauben durch Bohrungen im Radsteg gegeneinander zu verschrauben. Die gezeigte Geometrie der Reibringkörper ist dabei nur mit einem relativ aufwendigen Urformverfahren technisch sinnvoll herstellbar.

Weitere Reibringkörper zur Anordnung an den Radsteg eines Schienenrads sind in der EP 1 298 333 B1 und in der DE 44 17 813 A1 gezeigt. Die gusstechnische Herstellung solcher Reibringkörper erfordert technisch aufwendige Gießformen, insbesondere dann, wenn die Reibringkörper Anformungen aufweisen, mit denen diese an den Radsteg des Schienenrads anliegen, und wenn die Reibringkörper beispielsweise Kühlrippen aufweisen müssen, um die Reibringe zu kühlen.

Hierzu ist eine Lösung aus der DE 20 2013 103 487 U1 bekannt, in welcher ein Reibringkörper zur Anordnung an den Radsteg eines Schienenrads für ein Schienenfahrzeug sowie eine entsprechende Schienenradbremse beschrieben sind. Hierin wird vorgeschlagen, einen Reibringkörper aus einem flachen Metallmaterial herauszuschneiden und separate Anbindungskörper vorzusehen, welche in Bohrungen des Reibrings eingesetzt werden können und anschließend stoffschlüssig mit diesem Reibring fest verbunden werden. Nachteilig bei dieser Ausführungsform ist, dass die Materialien für den Reibring und die Anbindungskörper derart aufeinander abgestimmt sein müssen, dass ein (kostengünstiges) Schweißverfahren anwendbar ist.

Aus der US 4,281,745 A ist eine Bremsscheibe für eine Scheibenbremse bekannt, welche an einer Achse oder an einem Rad eines Schienenfahrzeugs angebracht ist. Die Bremsscheibe weist an einem inneren Umfang einen Flanschring auf, der parallele ringförmige Oberflächen umfasst. Die Oberflächen sind relativ zu einer Mittelebene der Bremsscheibe geneigt. Diese geneigten Flächen werden zwischen einer geneigten Fläche an einer Nabe und einer geneigten Fläche an einem Haltering eingeklemmt.

Die DE 20 2009 014 768 U1 offenbart eine Bremsscheibe, welche beiderseits eines Rads anordenbar ist und mittels über den Umfang der Bremsscheibe verteilten Befestigungsmitteln an dem Rad gegenüberliegend befestigbar ist. Die Bremsscheibe weist über den Umfang der Bremsscheibe verteilt Gleitsteine zur Zentrierung der Bremsscheibe am Rad auf, wobei die Gleitsteine einen zylindrischen ersten Bereich, der in eine Öffnung des Rads einsetzbar ist, und einen zweiten Bereich aufweisen, welcher planparallele Seitenflächen aufweist, welche mit planparallelen Flächen der Bremsscheibe zusammenwirken, um die Bremsscheibe am Rad in radialer Richtung zu zentrieren.

Aus der DE 20 2009 013 476 U1 ist eine Bremsscheibe bekannt, welche aus einer Mehrzahl von Segmenten zusammensetzbar ist, wobei die aus Segmenten zusammensetzbare Bremsscheibe einseitig oder beiderseits eines Trägers, wie eines Rads oder einer Befestigungsscheibe, anordenbar ist, wobei die Segmente mittels zumindest eines Befestigungsmittels an dem Träger befestigbar sind, wobei ein Segment eine radial äußere Kontur, eine radial innere Kontur, eine in Drehrichtung betrachtet voreilende Kontur und eine in Drehrichtung betrachtet nacheilende Kontur aufweist. Die in Drehrichtung betrachtet voreilende Kontur und/oder die in Drehrichtung betrachtet nacheilende Kontur ist zumindest in einem Teilbereich ihrer radialen Erstreckung um einen Winkel gegenüber der radialen Ausrichtung geneigt.

Die US 6,032,769 A offenbart einen modularen Bremsrotor mit an einem Kern befestigten Reibringen. Der Kern umfasst einen Hutabschnitt mit einer Hutwand und einer Vielzahl von in Umfangsrichtung beabstandeten Stützrippen. Ein Paar von Reibringen sind an inneren und äußeren Montageflächen der Stützrippen befestigt. Die Stützrippen erstrecken sich in Aussparungen, die in den Innenflächen der Reibringe gebildet sind.

### Offenbarung der Erfindung

Als Aufgabe der Erfindung ergibt sich damit eine Weiterbildung von Reibringkörpern für einen Reibringsatz zur Anordnung an den Radsteg eines Schienenrades zur Bildung einer Schienenradbremse, die einfach und kostengünstig herstellbar sein sollen. Insbesondere sollen die Reibringkörper auf einfache Weise mit Anbindungskörpern ausgestattet werden können, wobei die Anbindungskörper insbesondere Kühlkörper und/oder Verbindungskörper bilden sollen, über welche die Reibringe an den Radsteg angebunden werden können.

Diese Aufgabe wird ausgehend von einem Reibringkörper gemäß dem Oberbegriff des Anspruchs 1 sowie ausgehend von einem Reibringsatz gemäß dem Oberbegriff des Anspruchs 8 zur Anordnung an den Radsteg eines Schienenrads für ein Schienenfahrzeug zur Bildung einer Schienenradbremse und ausgehend von einer Schienenradbremse gemäß dem Oberbegriff des Anspruchs 11 mit den jeweils kennzeichnenden Merkmalen gelöst. Vorteilhafte Weiterbildungen der Erfindung sind in den abhängigen Ansprüchen angegeben.

Die separat ausgebildeten Anbindungskörper oder zumindest einige der Anbindungskörper sind kraftschlüssig mit dem Reibring verbunden, wobei die mit dem Reibring kraftschlüssig verbundenen Anbindungskörper jeweils mit einem Übermaß in eine entsprechende Öffnung im Reibring eingepresst sind. Die Anbindungskörper bilden Verbindungskörper, mittels welcher bei Anordnung des Reibringkörpers an den Radsteg eines Schienenrads der Reibring in Umlaufrichtung bezogen auf die Rotationsachse des Schienenrads an dessen Radsteg abgestützt ist. Die Verbindungskörper sind gegen ein Verdrehen relativ zu dem Reibring mittels eines Formschlusselements gesichert, wobei das Formschlusselements ein Stift ist.

Für weitere Anbindungskörper kann eine geeignete kraftschlüssige Verbindung unter anderem eine Verschraubung zwischen dem Anbindungskörper und dem Reibring sein. Hierbei ist jedoch unter der mechanischen Belastung an einem Schienenrad und insbesondere an einer Schienenradbremse eine zusätzliche Sicherung vorzusehen, beispielsweise eine Verstemmung. Es ist hierbei ein Einpressen der separat gebildeten Anbindungskörper in eine entsprechende Öffnung vorgesehen, welche mit einem Untermaß beziehungsweise der Anbindungskörper mit dem Verbindungsabschnitt, zum Beispiel einem Schaft, mit einem Übermaß in die entsprechende Öffnung eingebracht wird. Mögliche Ausführungsformen sind dabei das Einschlagen des Anbindungskörpers in die Öffnung und/oder das thermische Einpressen, wobei bevorzugt der jeweilige Anbindungskörper mittels Unterkühlen geschrumpft wird.

Der hier vorgeschlagene Reibringkörper umfasst einen Reibring, welcher durch ein zweidimensionales Fertigungsverfahren hergestellt werden kann. Insoweit wird auf die Lehre der DE 20 2013 103 487 U1 Bezug genommen. Auch die Funktion der Anbindungskörper kann verschiedenartig ausgeführt sein, indem sie beispielsweise Kühlkörper bilden, Verbindungskörper oder lediglich zum Sicherstellen eines eingestellten Abstands zwischen der Oberfläche des Radstegs und des Reibrings dienen. Auch insoweit wird auf die DE 20 2013 103 487 U1 vollumfänglich verwiesen. Es sei darauf hingewiesen, dass ein Verbindungskörper zugleich als Kühlkörper eingerichtet sein kann, aber nicht umgekehrt. Weiterhin sei darauf hingewiesen, dass die Anbindungskörper als Rohbauteile unabhängig von ihrer Funktion teils oder alle, identisch oder unterschiedlich ausgebildet sein können.

Hier wird nun aber vorgeschlagen, die Anbindungskörper und den Reibring aus einander verschiedenen metallischen Werkstoffen, zum Beispiel Aluminium und Stahl, oder auch nur verschiedenen Legierungen, vorzusehen. Hierbei können die Anbindungskörper und der Reibring aus schweißtechnisch inkompatiblen Werkstoffen ausgewählt sein, sodass der Freiheitsgrad bei der Auswahl der Werkstoffe deutlich erhöht wird. Für die Wahl des Werkstoffes des Reibrings sollte auf gute Verschleißmerkmale geachtet werden, während die Anbindungskörper nicht in reibenden Kontakt mit einem Bremsklotz kommen und beispielsweise hauptsächlich nur als Abstandhalter zwischen Radsteg und Reibring eingesetzt sind. Durch den Abstand zwischen Reibring und Radsteg wird ein Luftstrom erzeugt, mit welchem eine ausreichende Kühlung des Reibrings gewährleistet werden kann. Die Anbindungskörper können daher aus einem kostengünstigeren Werkstoff und/oder aus einem Werkstoff mit einem für die Anwendung geeigneten thermischen Ausdehnungskoeffizienten ausgewählt werden.

In einer bevorzugten Ausführungsform sind einige der Verbindungskörper dazu eingerichtet, dass der Reibring infolge eines Hitzeeintrags von einem Bremsvorgang sich radial relativ zum Radsteg ausdehnen kann und zugleich in Umlaufrichtung relativ zum Radsteg fixiert ist, also eine relative Verdrehung zwischen dem Radsteg und dem Reibringkörper allein mittels der Verbindungskörper unterbunden ist. Der Verbindungskörper ist dabei derart eingerichtet, dass keine radiale Spannung in den Reibringkörper induzierbar ist. Durch die Anordnung der Anbindungskörper kann der Reibring sich am Außen- und Innendurchmesser so abstützen, dass keine radiale Spannung im Reibring entstehen. Dadurch ist eine Schirmung, also ein tellerfederartiges Aufstellen, des Reibkörpers infolge eines thermischen Eintrags beim Bremsvorgang ausgeschlossen. Ebenfalls ist durch diese Anordnung eine fehlerhafte Montage des Reibkörpers am Radsteg ausgeschlossen.

In einer bevorzugten Ausführungsform weist ein solcher Verbindungskörper zwei zueinander parallele Anschlagwände auf, insbesondere planparallele Anschlagwände. Die Anschlagwände sind parallel zum Radius ausgerichtet ausgehend von der Rotationsachse des Schienenrads bei Anordnung des Reibringkörpers an dem Radsteg eines Schienenrads, also wenn der Reibringkörper an dem Schienenrad montiert ist. Die parallelen Anschlagwände sind dabei derart eingerichtet, dass ein entsprechender Kulissenstein, welcher weiter unten beschrieben wird, an den Anschlagwänden anliegt. In einer bevorzugten Ausführungsform ist der Kulissenstein mit zu den Anschlagwänden korrespondierenden Anschlagflächen versehen. Beispielsweise sind die Anschlagflächen eben und parallel zur zugeordneten Anschlagwand, bevorzugt ist das jeweilige Paar von Anschlagflächen wie auch das zugeordnete Paar von Anschlagwänden planparallel. In einer Ausführungsform bildet ein Paar von Anschlagwänden einen Schlitz, in welchem der Kulissenstein aufgenommen ist. In einer alternativen Ausführungsform bilden Anschlagflächen des Kulissensteins einen Schlitz, in welchem der Verbindungskörper aufgenommen ist.

Mittels der Anschlagwände des Verbindungskörpers ist eine Kraft in Umlaufrichtung des Schienenrads von dem Verbindungskörper auf den korrespondierenden Kulissenstein, welcher wiederum mit dem Radsteg des Schienenrads fest verbunden ist, übertragbar. Eine relative Bewegung, beispielsweise infolge (unterschiedlicher) thermischer Ausdehnung, parallel zum Radius (ausgehend von der Rotationsachse) des Schienenrads bleibt weiterhin möglich. Die entsprechende Aussparung in dem Verbindungskörper wird in einer Ausführungsform bereits vorgefertigt, beispielsweise durch Fräsen, und in einer anderen Ausführungsform erst nach der Montage des Verbindungskörpers an dem Ringkörper eingebracht.

Erfindungsgemäß wird zusätzlich zur Sicherstellung, dass der Verbindungskörper sich nicht im Laufe der Lebenszeit verdreht und möglicherweise mit dem Kulissenstein verkantet, relativ zum Reibring mittels eines als Stift ausgebildeten Formschlusselements gesichert. Hierzu ist beispielsweise eine Bohrung parallel zur Rotationsachse des Schienenrads in den Verbindungskörper und in den Reibring eingebracht, in welcher der Stift einsetzbar ist. Diese Vorrichtung zur formschlüssigen Verdrehsicherung des Verbindungskörpers kann bereits vor dem Anbringen des Verbindungskörpers am Reibring eingebracht sein oder nach der Montage beispielsweise durch Bohren eingebracht werden.

In einer bevorzugten Ausführungsform sind alle Anbindungskörper oder zumindest einige der Anbindungskörper als Bolzen ausgeführt. Ein solcher Bolzen weist einen Schaft und einen Kopf auf, wobei der Schaft zum kraftschlüssigen Einbringen in einer entsprechenden Öffnung in dem Reibring eingerichtet ist. Für eine besonders kostengünstige Herstellung ist der Bolzen als rotationssymmetrisches Element hergestellt, zum Beispiel mittels des spanenden Herstellungsverfahrens Drehen. Der Kopf bildet dabei die eigentliche Funktion des Anbindungskörpers, zum Beispiel indem er einen axialen Anschlag gegen den Radsteg bildet. Besonders bevorzugt ist ein solcher bolzenartiger Anbindungskörper aus Strangmaterial, besonders bevorzugt aus Stangenmaterial gefertigt. Hierbei sind Fertigungsaufwand und Materialüberschuss minimiert.

Der hier weiterhin vorgeschlagene Reibringsatz umfasst einen Reibringkörper, wie er oben beschrieben ist, sowie Kulissensteine und Verbindungselemente. Die Kulissensteine sind eingerichtet zum drehmomentübertragenden Fixieren des Reibringkörpers in Umlaufrichtung relativ zum Schienenrad und lassen bevorzugt eine radiale Relativbewegung zwischen dem Schienenrad beziehungsweise Radsteg und dem Reibringkörper zu. Eine solche radiale Relativbewegung tritt zum Beispiel infolge thermischer Ausdehnung der Bauteile auf. Mittels der Verbindungselemente ist der Reibringkörper kraftschlüssig an den Radsteg montierbar. Ist der Reibringsatz an einem Radsteg eines Schienenrads angebunden, so sind die Anbindungskörper, zumindest jene zum Kühlen einen Abstand zum Radsteg einstellenden Kühlkörper, zwischen dem Radsteg und dem Reibring mittels der Verbindungselemente eingeklemmt. Die eingeklemmten Anbindungskörper sind dabei derart eingerichtet, dass eine abgestützte Relativbewegung zwischen dem Radsteg und dem Reibring ermöglicht ist. Dadurch bleibt der Reibring, zumindest mit seiner Reiboberfläche, so plan, dass ein Bremsen über einen gesamten Umlauf des Reibrings unterbrechungsfrei, und bevorzugt mit vernachlässigbarer Reibkraftschwankung, möglich ist.

In einer Ausführungsform ist eine zu der Anzahl der Verbindungskörper korrespondierende Anzahl von Kulissensteinen vorgesehen und bei einer Anordnung, also Montage, an dem Radsteg eines Schienenrads zueinander korrespondierend angeordnet, sodass die Kulissensteine an den Anschlagwänden des jeweils zugeordneten Verbindungskörpers spielbehaftet anliegen. Das Spiel zwischen dem Kulissenstein und den Anschlagwänden ist hierbei unter Berücksichtigung der eingesetzten Fertigungsverfahren und der Kosten möglichst gering zu gestalten. Zugleich muss aber eine radiale Relativbewegung zwischen dem Kulissenstein und dem zugeordneten Verbindungskörper gewährleistet sein, gerade dann wenn der Verbindungskörper und/oder der Kulissenstein infolge eines Bremsvorgangs erhitzt sind.

In einer bevorzugten Ausführungsform sind die Kulissensteine lediglich formschlüssig mit dem Radsteg verbunden und axial allein mittels des Reibringkörpers und des Radstegs gesichert. Besonders bevorzugt umfasst ein Reibringsatz zwei Reibringkörper, welche paarig und beidseitig eines Radstegs montiert werden können. Bei dieser Ausführungsform sind die Reibringkörper des Reibringsatzes bevorzugt identisch ausgebildet. Weiterhin ist bevorzugt der Kulissenstein bei dieser Ausführungsform derart eingerichtet, dass er sich durch den Radsteg erstreckt und endseitig mit jeweils einem Verbindungskörper des jeweiligen Reibringkörpers wie oben beschrieben mit den Anschlagwänden im Eingriff steht. In radialer Richtung und Umlaufrichtung ist der Kulissenstein in der Ausnehmung des Radstegs fixiert.

Die Aufgabe der vorliegenden Erfindung wird ebenfalls gelöst durch eine Schienenradbremse mit einem Schienenrad, aufweisend eine Radnabe und einen Radkranz mit einer Lauffläche, wobei sich zwischen der Radnabe und dem Radkranz ein Radsteg erstreckt, und wobei ein Reibringsatz nach einer Ausführungsform gemäß der obigen Beschreibung angeordnet ist, welcher mittels der Verbindungselemente mit dem Radsteg am Schienenrad befestigt ist.

Zur Verbindung der Reibringkörper mit dem Radsteg können Verbindungselemente vorgesehen sein und beim Vorsehen von zwei paarigen Reibringkörper an einem Radsteg können die Verbindungselemente zum Verspannen der beiden Reibringkörper vorgesehen werden. Hierzu ist bevorzugt das Verbindungselement als Zugschraube mit einer Gegenmutter ausgeführt, sodass eine über ein Drehmoment definierte Verbindungskraft aufbringbar ist. Hierdurch ist gewährleistet, dass eine ausreichend hohe Verbindungskraft aufgebracht ist und zugleich eine relative Bewegung, insbesondere infolge radialer thermischer Ausdehnung eines der Reibringe beziehungsweise der beiden Reibringe, im Rahmen der Lasten und Pflichten der Reiboberfläche gemäß der obigen Beschreibung möglich ist. Dies ist durch einen Drehmomentschlüssel und eine entsprechende Kennzeichnung der Zugschraube bei der Qualitätssicherung oder Wartung schnell und sicher kontrollierbar.

### Bevorzugtes Ausführungsbeispiel der Erfindung

Weitere, die Erfindung verbessernde, Maßnahmen werden nachstehend gemeinsam mit der Beschreibung bevorzugter Ausführungsbeispiele der Erfindung anhand der Figuren näher dargestellt. Es zeigen:
Fig. 1 in einer perspektivischen Ansicht einen Reibring,
Fig. 2 in einer perspektivischen Ansicht einen Verbindungskörper,
Fig. 3 in einer perspektivischen Ansicht einen Kühlkörper,
Fig. 4 in einer perspektivischen Ansicht anbindungskörperseitig einen Reibringkörper als Rohteil,
Fig. 5 in einer perspektivischen Ansicht reiboberflächenseitig einen Reibringkörper als Rohteil,
Fig. 6 einen Stift zur formschlüssigen Verdrehsicherung eines Verbindungskörpers,
Fig. 7 in einer Draufsicht einen Detailausschnitt eines Verbindungskörpers, welcher verstiftet ist, angeordnet an einem Reibring,
Fig. 8 in einer Schnittdarstellung einen nachbearbeiteten Reibringkörper,
Fig. 9 in einer perspektivischen Ansicht anbindungskörperseitig einen fertig bearbeiteten Reibringkörper,
Fig. 10 in einer perspektivischen Ansicht einen Kulissenstein mit Anschlagflächen,
Fig. 11 in einer Schnittansicht einen Reibringsatz geschnitten bei einem Verbindungskörper,
Fig. 12 in einer Schnittansicht einen Reibringsatz geschnitten bei einem Verbindungselement,
Fig. 13 in perspektivischer Ansicht eine Schienenradbremse.

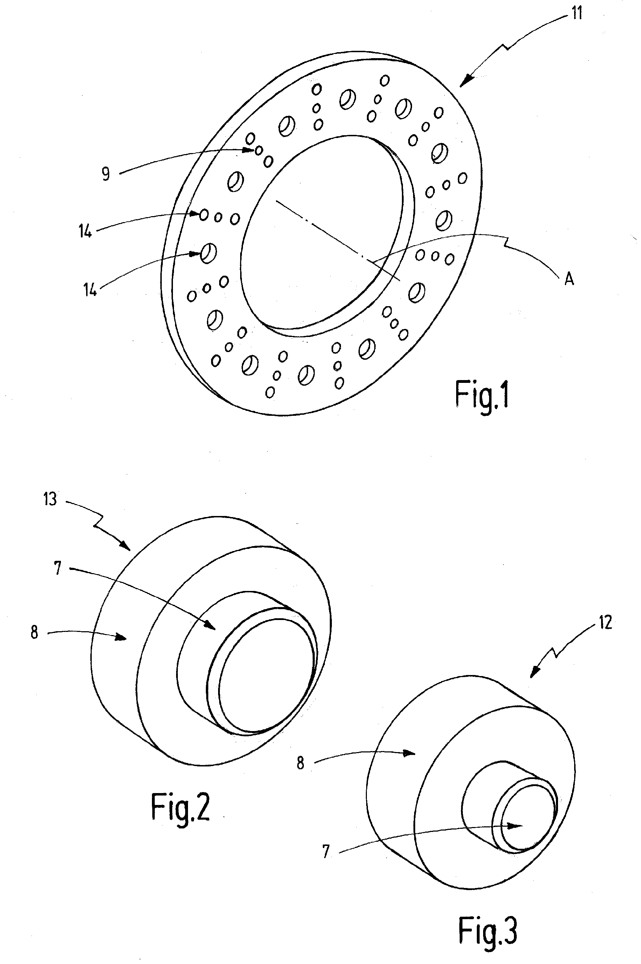

Fig. 1 zeigt einen Reibring 11 in perspektivischer Ansicht, wobei hier die Seite für die Anbindungskörper (vgl. Fig. 2 und Fig. 3) zu sehen ist, in welche die Öffnungen 14 für die (hier nicht dargestellten) Anbindungskörper eingebracht sind. Weiterhin sind eine Mehrzahl von Befestigungsbohrungen 9 vorgesehen, mittels welcher der Reibring 11 an einen (hier nicht dargestellten) Radsteg eines Schienenrads anbindbar ist. Der Reibring 11 weist eine Rotationsachse A auf. Die Öffnungen 14 und die Befestigungsbohrungen 9 sind in diesem Beispiel rotationssymmetrisch zu der Rotationsachse A angeordnet.

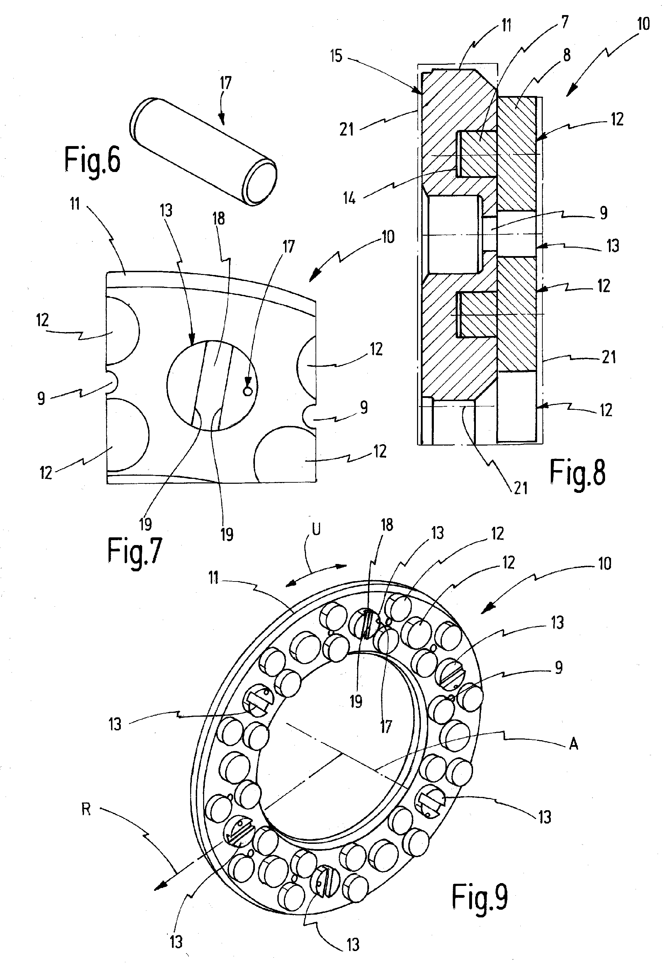

In Fig. 2 ist beispielhaft ein Verbindungskörper 13 dargestellt, welcher in die jeweils größten Öffnungen 14, wie sie in Fig. 1 jeweils zwischen den radialen Lochtripeln dargestellt sind, einpressbar ist. Der Verbindungskörper 13 ist hierbei bolzenartig ausgeführt und weist einen Schaft 7 zum Einpressen in eine Öffnung 14 und einen Kopf 8 für die Funktion des Verbindungskörpers 13 auf. Der dargestellte Verbindungskörper 13 ist hier noch als Rohbauteil dargestellt, bei welchem die Aussparung (vgl. Fig. 7 und Fig. 9) noch nicht eingebracht ist. Grundsätzlich ist dieses Rohbauteil daher auch als reiner Kühlkörper (vgl. Fig. 9) einsetzbar.

Fig. 3 zeigt einen ähnlich aufgebauten Kühlkörper 12 mit einem Schaft 7 und einem Kopf 8. Der Schaft 7 ist hierbei kleiner ausgeführt als bei dem Verbindungskörper 13 gemäß Fig. 2 und ist in die jeweils kleinere Öffnung 14, wie sie in Fig. 1 dargestellt ist, einpressbar.

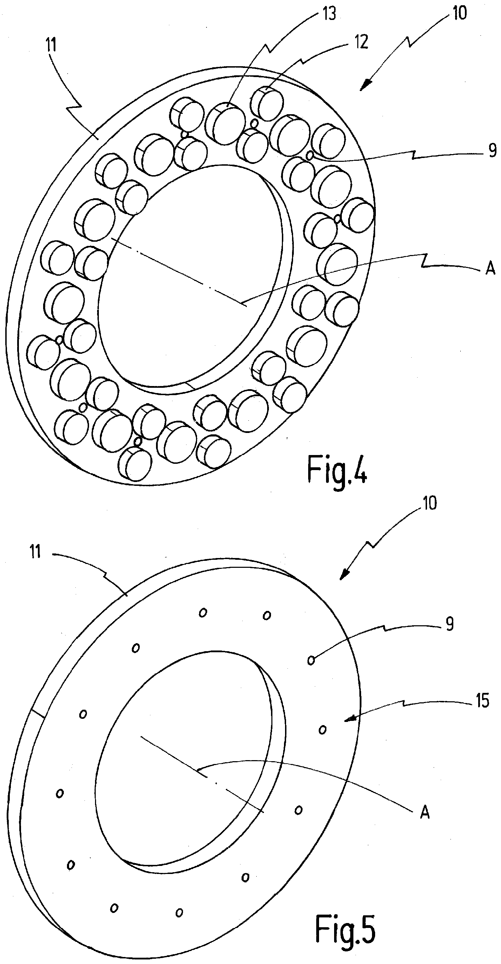

In Fig. 4 ist ein Reibringkörper 10 in perspektivischer Ansicht gezeigt, wobei hier auf die Seite der Anbindungskörper 12,13 des Reibrings 11 geblickt wird. Hier sind also die Anbindungskörper 12 und 13 in die jeweiligen Öffnungen 14, welche nun verdeckt sind (vergleiche Fig. 1), eingepresst. Die Befestigungsbohrungen 9 bleiben frei. Die Aussparung in dem Verbindungskörper 13 ist noch immer nicht eingebracht (vgl. Fig. 7 und Fig. 9).

Fig. 5 zeigt den gleichen Reibringkörper 10 wie in Fig. 4, wobei hier auf die Reibungsoberfläche 15 des Reibrings 11 geblickt wird. Aus dieser Darstellung erschließt sich, dass allein die Befestigungsbohrungen 9 Durchgangslöcher sind und die Öffnungen 14 in diesem Ausführungsbeispiel (vergleiche Fig. 1) als Sacklöcher ausgeführt sind.

In Fig. 6 ist ein einfacher Stift 17 gezeigt, welcher zur formschlüssigen Verdrehsicherung eines Anbindungskörpers (vergleiche Fig. 7) einführbar ist.

Fig. 7 zeigt nun eine Detailansicht eines Reibringkörpers 10 in Draufsicht, wobei ein beispielhafter Verbindungskörper 13 gezeigt ist. Links und rechts des Verbindungskörpers 13 sind mehrere Kühlkörper 12 und zwei Befestigungsbohrungen 9 angeschnitten gezeigt. Der Verbindungskörper 13 ist in eine hier verdeckte Öffnung 14 (vergleiche Fig. 1) eingepresst und eine Aussparung 18 wurde, in diesem Beispiel nach dem vorgenannten Einpressen, in den Verbindungskörper 13 eingebracht. In diesem Beispiel ebenfalls nach dem vorgenannten Einpressen wird eine Bohrung für einen Stift 17 eingebracht, um den Verbindungskörper 13 formschlüssig gegen Verdrehen zu sichern. Die Anschlagwände 19 der Aussparung 18 sind parallel zu einem Radius R ausgerichtet (vergleiche Fig. 9).

In Fig. 8 ist ein Schnitt durch einen Reibringkörper 10 dargestellt, welcher nach den zuvor genannten Schritten von Fig. 1 bis Fig. 7 spanend nachbearbeitet wird. Die ursprüngliche Form, wie sie in Fig. 5 noch vorliegt, ist durch die strichpunktierten Nachbearbeitungslinien 21 angedeutet. Der hier dargestellte Schnitt ist durch zwei Kühlkörper 12 geführt, sodass deren geschnittener Schaft 7 und Kopf 8 sowie die Öffnungen 14, in welche die Kühlkörper 12 jeweils eingepresst sind, zu sehen ist. Weiterhin ist die Befestigungsbohrung 9 zu erkennen, wobei sich hier von der Reiboberflächenseite eine eingesenkte Bohrung, hier für einen Außensechskant, anschließt. Im Hintergrund sind weiterhin zwei Anbindungskörper 12 und 13 zu erkennen, welche ebenfalls wie die Reiboberfläche 15 plangedreht und/oder - geschliffen worden sind, sodass alle Anbindungskörper 12,13 in einer gemeinsamen Ebene plan ausgeführt sind.

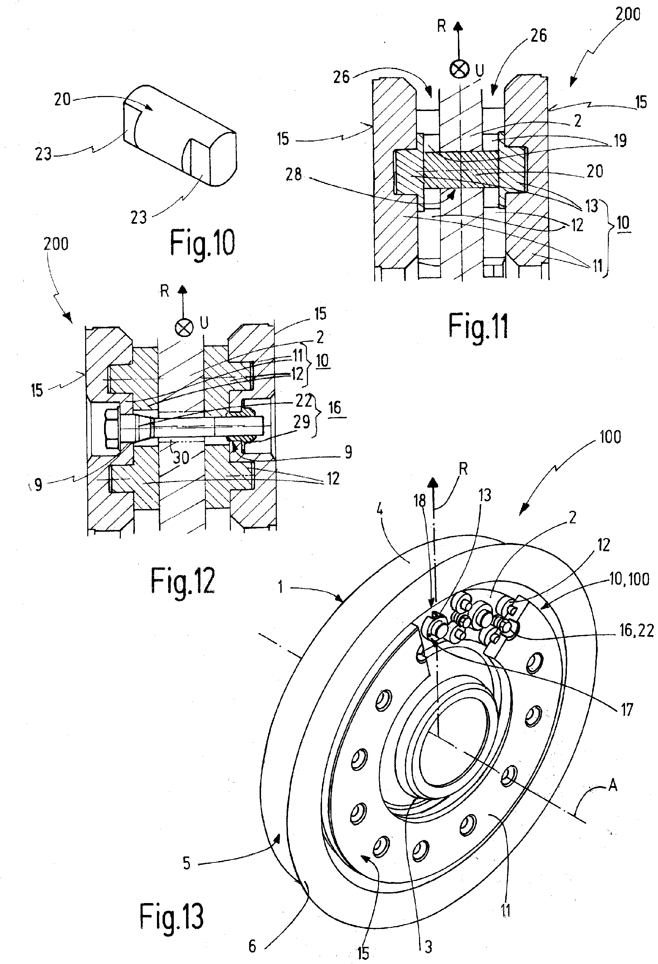

Fig. 9 zeigt in einer perspektivischen Ansicht einen Reibringkörper 10, welcher fertig für die Montage an einem Schienenrad ausgebildet ist. Hierbei sind insbesondere die Verbindungskörper 13 mit den Aussparungen 18 und den entsprechenden Formschlusselementen 17 zu beachten. Die Anschlagwände 19 sind parallel zum hier exemplarisch dargestellten Radius R zur Rotationsachse A ausgeführt. Hier ist weiterhin zu erkennen, dass nicht jeder der großen Anbindungskörper als Verbindungskörper 13 ausgeführt sein muss, sondern vielmehr auch als Kühlkörper 12 eingerichtet sein kann. Die Verbindungskörper 13 ermöglichen nun zusammen mit einem Kulissenstein (wie er beispielsweise in Fig. 10 gezeigt ist) eine relative radiale Bewegung zum Schienenrad, also entlang des Radius R. Zugleich ermöglichen sie aber eine Kraft- beziehungsweise Drehmomentübertragung in Umlaufrichtung U bezogen auf die Rotationsachse A.

Fig. 10 zeigt einen Kulissenstein 20 mit hier zu erkennenden Anschlagflächen 23, welche mit hier verdeckten paarig angeordneten Anschlagflächen planparallel sind. Die Anschlagflächen 23 sind korrespondierend zu den Anschlagwänden 19 der Aussparung 18 eines Verbindungskörpers 13, wie beispielsweise in Fig. 9 dargestellt, ausgebildet.

Fig. 11 zeigt einen Schnitt durch einen Reibringsatz 200 mit einer paarigen Ausführungsform von Reibringkörpern 10 links und rechts eines Radstegs 2. In dieser Schnittdarstellung ist ein Kulissenstein 20 und zwei korrespondierende Verbindungskörper 13, von denen die Anschlagwände 19 zu erkennen sind, dargestellt. Der Kulissenstein 20 ist hierbei durch eine Ausnehmung 28 in dem Radsteg 2 eingebracht. Der Kulissenstein 20 erstreckt sich durch diese Ausnehmung 28 hindurch, sodass die Anschlagflächen 23 (vergleiche Fig. 10) mit den Anschlagwänden 19 der jeweiligen Verbindungskörper 13 in Krafteingriff gebracht sind. Mittels der Kühlkörper 12, welche hier im Hintergrund zu erkennen sind, aber auch mittels der Verbindungskörper 13 wird ein Lüftungsspalt 26 jeweils zwischen dem Reibring 11 und dem Radsteg 2 erzeugt. Die Reiboberflächen 15, welche zum Beaufschlagen mit einer Reibkraft mittels eines Bremsklotzes (nicht dargestellt) eingerichtet sind, sind jeweils axial nach außen gerichtet, also vom Radsteg 2 weggewendet.

In Fig. 12 ist ein ähnlicher Schnitt durch einen Reibringsatz 200 wie in Fig. 11 gezeigt, wobei hier der Schnitt durch die Befestigungsbohrungen 9 geführt ist, sodass hier ein exemplarisches Verbindungselement 16, gebildet aus einer Zugschraube 22 und einer Gegenmutter 29 zu erkennen ist. Hier ist weiterhin zu erkennen, dass der Querschnitt der Zugschraube 22 deutlich kleiner ist als der Querschnitt der Durchgangsöffnung 30 im Radsteg 2, sodass über die Zugschraube 22 keine radiale Positionierung und bevorzugt auch keine Positionierung in Umlaufrichtung vorgenommen wird. Vielmehr ist hier durch die Mittellinie der Zugschraube 22 und die sich mit dieser nicht überlagernde Mittellinie der Durchgangsöffnung 30 angedeutet, dass die Zugschraube 22 zu der Durchgangsöffnung 30 nicht zentriert ist oder sein muss. In diesem Schnitt sind weiterhin Kühlkörper 12 zu erkennen, welche in den Reibring 11 eingepresst sind. Im Übrigen wird auf die Beschreibung zu Fig. 11 verwiesen.

Fig. 13 zeigt eine Schienenradbremse 100, welche ein Schienenrad 1 und zwei Reibringkörper 10 eines Reibringsatzes 200 umfasst. Die Reibringkörper 10 umfassen einen Reibring 11 und eine Mehrzahl von Anbindungskörpern 12,13. Hier ist nur der erste (spurkranzseitige) Reibringkörper 10 zu sehen. Der zweite (laufflächenseitige) Reibringkörper 10 ist in dieser Darstellung durch den Radsteg 2 verdeckt, wird aber von dem gemeinsamen Verbindungsmittel 16 gehalten (vgl. Fig. 12). Das Schienenrad 1 weist hierbei einen Radkranz 4 auf, welcher eine Lauffläche 5 und einen Spurkranz 6 bildet, mittels welcher das Schienenrad 1 zum Abrollen auf einer Schiene eingerichtet ist. Die Radnabe 3 im Zentrum des Schienenrads 1 ist zur Anbindung des Schienenrads 1 an eine Achse oder Welle eingerichtet (nicht dargestellt). Die Rotationsachse A des Schienenrads 1 ist konzentrisch zu den Reibringkörpern 10 ausgerichtet. Die Radnabe 3 ist über einen Radsteg 2 mit dem Radkranz 4 verbunden. In diesem Radsteg 2 sind die Verbindungselemente 16 und die Kulissensteine 20 (in dieser Darstellung verdeckt, vgl. Fig. 11) eingebracht, und die Anbindungskörper 12,13 in axialer Richtung bezogen auf die Rotationsachse A abgestützt. Die Kühlkörper 12 bilden dabei ein Abstandelement zwischen dem Reibring 11 und dem Radsteg 2. Die Verbindungskörper 13 weisen eine Aussparung auf, welche parallel zum Radius R ausgerichtet ist. Diese Ausrichtung ist mittels eines Formschlusselements 17 mit dem Reibring 11 gegen relatives Verdrehen gesichert. Hierdurch kann sich der Reibringkörper 10 infolge eines thermischen Eintrags ungehindert radial ausdehnen, also eine radiale Relativbewegung zum Schienenrad 1 ausführen.

Die Figuren und die zugehörige Beschreibung zeigen neben beispielhaften Ausführungsformen zudem eine bevorzugte Abfolge der Schritte eines Herstellungsverfahrens.

Mit der hier dargestellten Schienenradbremse, bzw. Reibringkörper, ist eine kostengünstige Herstellung und ein hoher Freiheitsgrad in der Auswahl der Werkstoffe erzielt.

### Bezugszeichenliste

- 100: Schienenradbremse
- 200: Reibringsatz

- 1: Schienenrad
- 2: Radsteg
- 3: Radnabe
- 4: Radkranz
- 5: Lauffläche
- 6: Spurkranz
- 7: Schaft
- 8: Kopf
- 9: Befestigungsbohrung im Reibring
- 10: Reibringkörper
- 11: Reibring
- 12: Anbindungskörper, Kühlkörper
- 13: Anbindungskörper, Verbindungskörper
- 14: Öffnung im Reibring
- 15: Reiboberfläche des Reibringkörpers
- 16: Verbindungselement
- 17: Formschlusselement bzw. Stift
- 18: Aussparung im Verbindungskörper
- 19: Anschlagwände der Aussparung
- 20: Kulissenstein
- 21: Nachbearbeitungslinien des Reibringköpers
- 22: Zugschraube
- 23: Anschlagflächen des Kulissensteins
- 26: Lüftungsspalt
- 28: Ausnehmung im Radsteg
- 29: Gegenmutter
- 30: Durchgangsöffnung im Radsteg

- A: Rotationsachse
- R: Radius
- U: Umlaufrichtung

## Patentansprüche

1. Reibringkörper (10) für einen Reibringsatz (200) zur Anordnung an den Radsteg (2) eines Schienenrads (1) für ein Schienenfahrzeug zur Bildung einer Schienenradbremse (100), wobei der Reibringkörper (10) einen Reibring (11) und mehrere als separate Bauteile ausgebildete an den Reibring (11) angeordnete Anbindungskörper (12,13) aufweist, **dadurch gekennzeichnet, dass** zumindest einige der Anbindungskörper (12,13) kraftschlüssig mit dem Reibring (11) verbunden sind, und dass die mit dem Reibring (11) kraftschlüssig verbundenen Anbindungskörper (12,13) jeweils mit einem Übermaß in eine entsprechende Öffnung (14) im Reibring (11) eingepresst sind, und dass die Anbindungskörper (13) Verbindungskörper bilden, mittels welcher bei Anordnung des Reibringkörpers (10) an den Radsteg (2) eines Schienenrads (1) der Reibring (11) in Umlaufrichtung (U) bezogen auf die Rotationsachse (A) des Schienenrads (1) an dessen Radsteg (2) abgestützt ist, und dass die Verbindungskörper (13) gegen ein Verdrehen relativ zu dem Reibring (11) mittels eines Formschlusselements (17) gesichert sind, wobei das Formschlusselements (17) ein Stift ist.

2. Reibringkörper (10) nach Anspruch 1, wobei der Reibring (11) aus einem Flachmetallmaterial ausgeschnitten ist, wobei der Reibring (11) bevorzugt aus Flachstahlmaterial oder Flachaluminiummaterial ausgeschnitten ist.

3. Reibringkörper (10) nach einem der vorgenannten Ansprüche, wobei die Anbindungskörper (12,13) und der Reibring (11) aus einander verschiedenen metallischen Werkstoffen gebildet sind, insbesondere eine für ein günstiges Schweißverfahren ungeeignete Materialpaarung bildend.

4. Reibringkörper (10) nach einem der vorgenannten Ansprüche, wobei die Anbindungskörper (12) Kühlkörper bilden, mittels welcher bei Anordnung des Reibringkörpers (10) an den Radsteg (2) eines Schienenrads (1) ein Kühlluftstrom zwischen dem Reibring (11) und dem Radsteg (2) ausbildbar ist.

5. Reibringkörper (10) nach einem der vorgenannten Ansprüche, wobei die Verbindungskörper (13) eine Aussparung (18) mit zwei zueinander parallelen Anschlagwänden (19) aufweisen, und die Anschlagwände (19) bei Anordnung an den Radsteg (2) eines Schienenrads (1) parallel zu einem Radius (R) von der Rotationsachse (A) des Schienenrads (1) ausgerichtet sind.

6. Reibringkörper (10) nach einem der vorgenannten Ansprüche, wobei die Anbindungskörper (12,13) als Bolzen mit einem Schaft (7) und mit einem Kopf (8) ausgebildet sind, wobei der Schaft (7) kraftschlüssig mit dem Reibring (11) verbunden ist und der Kopf (8) bei Anordnung an den Radsteg (2) eines Schienenrads (1) einen bezogen auf die Rotationsachse (A) axialen Anschlag gegen den Radsteg (2) bildet.

7. Reibringkörper (10) nach einem der vorgenannten Ansprüche, wobei die Anbindungskörper (12,13) aus Strangmaterial gebildet sind, und/oder wobei die Anbindungskörper (12,13) aus Stahl oder Aluminium gebildet sind, und/oder wobei der Reibring (11) und/oder die Anbindungskörper (12,13) mittels einem Laserstrahlschneidverfahren, einem Wasserstrahlschneidverfahren oder einem thermischen Trennverfahren aus einem Vollmaterial aus beziehungsweise abgeschnitten sind.

8. Reibringsatz (200) zur Anordnung an den Radsteg (2) eines Schienenrads (1) für ein Schienenfahrzeug zur Bildung einer Schienenradbremse (100), umfassend zumindest die folgenden Komponenten:
- zumindest einen Reibringkörper (10) nach einem der vorgenannten Ansprüche;
- Kulissensteine (20) zum drehmomentübertragenden Fixieren des Reibringkörpers (10) bei Anordnung an dem Radsteg (2) eines Schienenrads (1) in Umlaufrichtung (U) bezogen auf die Rotationsachse (A) des Schienenrads (1);
- Verbindungselemente (16) zum kraftschlüssigen Anbinden des Reibringkörpers (10) an den Radsteg (2) eines Schienenrads (1),
wobei bei Anordnung an dem Radsteg (2) eines Schienenrads (1) zumindest einige der Anbindungskörper (12,13) mittels der Verbindungselemente (16) zwischen dem Reibring (11) und dem Radsteg (2) eingeklemmt sind.

9. Reibringsatz (200) nach Anspruch 8, wobei mehrere Verbindungskörper (13) nach Anspruch 5 vorgesehen sind, und wobei die Kulissensteine (20) eine zu den Verbindungskörpern (13) korrespondierende Anzahl bilden und bei Anordnung an dem Radsteg (2) eines Schienenrads (1) korrespondierend angeordnet sind und die Kulissensteine (20) an den Anschlagwänden (19) des jeweils zugeordneten Verbindungskörpers (13) spielbehaftet und bezogen auf die Rotationsachse (A) des Schienenrads (1) radial zueinander relativ verschiebbar anliegen und den Reibringkörper (10) in Umlaufrichtung (U) drehmomentübertragend fixiert, wobei bevorzugt die Kulissensteine (20) bolzenartig jeweils in einer Ausnehmung (28) in dem Radsteg (2) anordenbar sind.

10. Reibringsatz (200) nach einem der Ansprüche 8 oder 9, wobei der Reibringsatz (200) zwei Reibringkörper (10) zum paarigen Anordnen beidseits des Radstegs (2) eines Schienenrads (1) umfasst, wobei bevorzugt zumindest einer der Kulissensteine (20) zum drehmomentübertragenden Fixieren in Umlaufrichtung (U) von beiden Reibringkörpern (10) eingerichtet ist und sich bei Anordnung an dem Radsteg (2) eines Schienenrads (1) durch eine Ausnehmung (28) hindurch erstreckt, wobei besonders bevorzugt der zumindest eine Kulissenstein (20) bei Anordnung an dem Radsteg (2) eines Schienenrads (1) bezogen auf die Rotationsachse (A) des Schienenrads (1) axial ist und/oder gegen ein Verdrehen um seine axiale Erstreckung mittels der zugeordneten Verbindungskörper (13) gesichert ist.

11. Schienenradbremse (100) mit einem Schienenrad (1), aufweisend eine Radnabe (3) und einen Radkranz (4) mit einer Lauffläche (5), wobei sich zwischen der Radnabe (3) und dem Radkranz (4) ein Radsteg (2) erstreckt, und wobei ein Reibringsatz (200) nach einem der Ansprüche 8 bis 10 angeordnet ist, welcher mittels der Verbindungselemente (16) an dem Radsteg (2) am Schienenrad (1) befestigt ist.

12. Schienenradbremse (100) nach Anspruch 11, wobei zumindest eines der Verbindungselemente (16) eine Zugschraube (22) und eine Gegenmutter (29) umfasst.

13. Schienenradbremse (100) nach Anspruch 12, mit einem Reibringsatz (200) nach Anspruch 10, wobei das zumindest eine Verbindungselement (16) beide Reibringkörper (10) an dem Radsteg (2) befestigt.

14. Schienenradbremse (100) nach Anspruch 12 oder 13, wobei sich das zumindest eine Verbindungselement (16) durch eine Durchgangsöffnung (30) in dem Radsteg (2) erstreckt, und die Durchgangsöffnung (30) einen größeren Querschnitt als den Querschnitt des im Bereich der Durchgangsöffnung (30) angeordneten Abschnitts des Verbindungselements (16) aufweist.

## Claims

1. Friction ring body (10) for a friction ring set (200) for arrangement on the wheel web (2) of a rail wheel (1) for a rail vehicle for forming a rail wheel brake (100), wherein the friction ring body (10) has a friction ring (11) and several connecting bodies (12,13) configured as separate components and arranged on the friction ring (11), **characterized in that** at least some of the connecting bodies (12, 13) are frictionally connected to the friction ring (11), and **in that** the connecting bodies (12,13), which are frictionally connected to the friction ring (11), are each pressed with an oversize into a corresponding opening (14) in the friction ring (11), and **in that** the connecting bodies (13) form connection bodies, by means of which, when the friction ring body (10) is arranged on the wheel web (2) of a rail wheel (1), the friction ring (11) is supported on the wheel web (2) of the rail wheel (1) in the direction of rotation (U) with respect to the axis of rotation (A) of the rail wheel (1), and **in that** the connection bodies (13) are secured against contortion relative to the friction ring (11) by means of a positive lockingelement (17), wherein the positive locking element (17) is a pin.

2. Friction ring body (10) according to claim 1, wherein the friction ring (11) is cut from a flat metal material, wherein the friction ring (11) preferably is cut from flat steel material or flat aluminum material.

3. Friction ring body (10) according to one of the aforementioned claims, wherein the connecting bodies (12, 13) and the friction ring (11) are formed from mutually different metallic materials, in particular forming a material pairing unsuitable for a favorable welding process.

4. Friction ring body (10) according to one of the aforementioned claims, wherein the connecting bodies (12) form cooling bodies by means of which, when the friction ring body (10) is arranged on the wheel web (2) of a rail wheel (1), a cooling air flow can be formed between the friction ring (11) and the wheel web (2).

5. Friction ring body (10) according to one of the aforementioned claims, wherein the connection bodies (13) have a recess (18) with two stop walls (19) parallel to one another, and the stop walls (19) are aligned parallel to a radius (R) from the axis of rotation (A) of the rail wheel (1) when arranged on the wheel web (2) of a rail wheel (1).

6. Friction ring body (10) according to one of the aforementioned claims, wherein the connecting bodies (12, 13) are configured as bolts with a shank (7) and with a head (8), wherein the shank (7) is frictionally connected to the friction ring (11) and the head (8), when arranged on the wheel web (2) of a rail wheel (1), forms an axial stop against the wheel web (2) with respect to the axis of rotation (A).

7. Friction ring body (10) according to one of the aforementioned claims, wherein the connecting bodies (12, 13) are formed from strand material, and/or wherein the connecting bodies (12, 13) are formed from steel or aluminum, and/or wherein the friction ring (11) and/or the connecting bodies (12, 13) are cut from a solid material by means of a laser beam cutting process, a water jet cutting process or a thermal cutting process.

8. Friction ring set (200) for arrangement on the wheel web (2) of a rail wheel (1) for a rail vehicle for forming a rail wheel brake (100), comprising at least the following components:
- at least one friction ring body (10) according to one of the aforementioned claims;
- sliding blocks (20) for fixing the friction ring body (10) in a torque-transmitting manner when arranged on the wheel web (2) of a rail wheel (1) in the direction of rotation (U) with respect to the axis of rotation (A) of the rail wheel (1);
- connection elements (16) for frictional locking connection of the friction ring body (10) to the wheel web (2) of a rail wheel (1),
wherein, when arranged on the wheel web (2) of a rail wheel (1), at least some of the connecting bodies (12, 13) are clamped between the friction ring (11) and the wheel web (2) by means of the connection elements (16).

9. Friction ring set (200) according to claim 8, wherein several connection bodies (13) are provided according to claim 5, and wherein the sliding blocks (20) form a number corresponding to the connection bodies (13) and, when arranged on the wheel web (2) of a rail wheel (1), are arranged in a corresponding manner and the sliding blocks (20) abut against the stop walls (19) of the respectively associated connection body (13) with clearance and in a manner displaceable radially relative to one another with respect to the axis of rotation (A) of the rail wheel (1) and fix the friction ring body (10) in a torque-transmitting manner in the direction of rotation (U), wherein the sliding blocks (20) can preferably each be arranged in a recess (28) in the wheel web (2) in the manner of a bolt.

10. Friction ring set (200) according to one of claims 8 or 9, wherein the friction ring set (200) comprises two friction ring bodies (10) for arranging in pairs on both sides of the wheel web (2) of a rail wheel (1), wherein preferably at least one of the sliding blocks (20) is configured for the torque-transmitting fixing in the direction of rotation (U) of both friction ring bodies (10) and, when arranged on the wheel web (2) of a rail wheel (1), extends through a recess (28), wherein particularly preferably the at least one sliding block (20), when arranged on the wheel web (2) of a rail wheel (1), is axial with respect to the axis of rotation (A) of the rail wheel (1) and/or is secured against contortion about its axial extent by means of the associated connection bodies (13).

11. Rail wheel brake (100) with a rail wheel (1), having a wheel hub (3) and a wheel rim (4) with a running surface (5), wherein a wheel web (2) extends between the wheel hub (3) and the wheel rim (4), and wherein a friction ring set (200) according to one of claims 8 to 10 is arranged, which is fastened to the wheel web (2) on the rail wheel (1) by means of the connection elements (16).

12. Rail wheel brake (100) according to claim 11, wherein at least one of the connection elements (16) comprises a tension bolt (22) and a counter nut (29).

13. Rail wheel brake (100) according to claim 12 with a friction ring set (200) according to claim 10, wherein the at least one connection element (16) attaches both friction ring bodies (10) to the wheel web (2).

14. Rail wheel brake (100) according to claim 12 or 13, wherein the at least one connection element (16) extends through a through opening (30) in the wheel web (2), and the through opening (30) has a larger cross-section than the cross-section of the section of the connection element (16) located in the region of the through opening (30).

## Revendications

1. Corps de bague de friction (10) pour un ensemble de bagues de friction (200) destiné à être disposé sur l'âme de roue (2) d'une roue ferroviaire (1) pour un véhicule ferroviaire pour former un frein de roue de rail (100), le corps de bague de friction (10) comprenant un bague de friction (11) et plusieurs corps de liaison (12, 13), **caractérisé en ce qu'**au moins certains des corps de liaison (12, 13) étant reliés par adhérence à la bague de friction (11), et **en ce que** les corps de liaison (12, 13) sont enfoncés chacun avec une surdimension dans une ouverture (14) correspondante dans la bague de friction (11), et **en ce que** les corps de liaison (13) forment des corps de liaison au moyen desquels, lorsque le corps de bague de friction (10) est disposé sur l'âme (2) d'une roue ferroviaire (1), la bague de friction (11) s'appuie dans le sens de rotation (U) par rapport à l'axe de rotation (A) de la roue ferroviaire (1) sur son âme (2), et **en ce que** les corps de liaison (13) sont bloqués contre une rotation par rapport à la bague de friction (11) au moyen d'un élément à engagement positif (17), l'élément à engagement positif (17) étant une broche.

2. Corps de bague de friction (10) selon la revendication 1, dans lequel la bague de friction (11) est découpée dans un matériau métallique plat, la bague de friction (11) étant de préférence découpée dans un matériau en acier plat ou en aluminium plat.

3. Corps de bague de friction (10) selon l'une des revendications précédentes, dans lequel les corps de liaison (12, 13) et la bague de friction (11) sont formés de matériaux métalliques différents l'un de l'autre, formant en particulier un couple de matériaux inadapté à un procédé de soudage favorable.

4. Corps de bague de friction (10) selon l'une des revendications précédentes, dans lequel les corps de liaison (12) forment des corps de refroidissement au moyen desquels, lorsque le corps de bague de friction (10) est disposé sur l'âme (2) d'une roue ferroviaire (1), un courant d'air de refroidissement peut être formé entre la bague de friction (11) et l'âme (2) de la roue.

5. Corps de bague de friction (10) selon l'une des revendications précédentes, dans lequel les corps de liaison (13) présentent un évidement (18) avec deux parois de butée (19) parallèles entre elles, et les parois de butée (19) sont orientées parallèlement à un rayon (R) de l'axe de rotation (A) de la roue ferroviaire (1) lorsqu'elles sont disposées sur l'âme (2) d'une roue ferroviaire (1).

6. Corps de bague de friction (10) selon l'une des revendications précédentes, dans lequel les corps de liaison (12, 13) sont réalisés sous forme de boulons avec une tige (7) et avec une tête (8), la tige (7) étant reliée par adhérence à la bague de friction (11) et la tête (8) formant, lorsqu'elle est disposée sur l'âme (2) d'une roue ferroviaire (1), une butée axiale contre l'âme (2) par rapport à l'axe de rotation (A).

7. Corps de bague de friction (10) selon l'une des revendications précédentes, dans lequel les corps de liaison (12, 13) sont formés d'un matériau extrudé, et/ou dans lequel les corps de liaison (12, 13) sont formés d'acier ou d'aluminium, et/ou dans lequel la bague de friction (11) et/ou les corps de liaison (12, 13) sont respectivement découpés dans un matériau plein au moyen d'un procédé de découpe au laser, d'un procédé de découpe au jet d'eau ou d'un procédé de séparation thermique.

8. Jeu de bagues de friction (200) destiné à être placé sur l'âme (2) d'une roue ferroviaire (1) pour un véhicule ferroviaire afin de former un frein de roue ferroviaire (100), comprenant au moins les composants suivants :
- au moins un corps de friction (10) selon l'une des revendications précitées ;
- des coulisseaux (20) pour la fixation, avec transmission du couple, du corps de bague de friction (10) lorsqu'il est disposé sur l'âme (2) d'une roue ferroviaire (1) dans le sens de rotation (U) par rapport à l'axe de rotation (A) de la roue ferroviaire (1) ;
- des éléments de liaison (16) pour relier par adhérence le corps de bague de friction (10) à l'âme de roue (2) d'une roue ferroviaire (1), dans lequel, lorsqu'ils sont disposés sur l'âme de roue (2) d'une roue ferroviaire (1), au moins certains des corps de liaison (12, 13) sont serrés entre la bague de friction (11) et l'âme de roue (2) au moyen des éléments de liaison (16).

9. Jeu de bagues de friction (200) selon la revendication 8, dans lequel plusieurs corps de liaison (13) sont prévus selon la revendication 5, et dans lequel les coulisseaux (20) forment un nombre correspondant aux corps de liaison (13) et, lorsqu'ils sont disposés sur l'âme de roue (2) d'une roue ferroviaire (1), sont disposés de manière correspondante et les coulisseaux (20) s'appliquent contre les parois de butée (19) du corps de liaison (13) respectivement associé avec un jeu et de manière à pouvoir être déplacés radialement les uns par rapport aux autres par rapport à l'axe de rotation (A) de la roue ferroviaire (1) et fixe le corps de bague de friction (10) dans le sens de rotation (U) en transmettant le couple, de préférence, les coulisseaux (20) pouvant être disposés à la manière de boulons dans un évidement (28) de l'âme de roue (2).

10. Jeu de bagues de friction (200) selon l'une des revendications 8 ou 9, dans lequel le jeu de bagues de friction (200) comprend deux corps de bagues de friction (10) destinés à être disposés par paires de part et d'autre de l'âme (2) d'une roue ferroviaire (1), de préférence au moins l'un des coulisseaux (20) étant agencé pour la fixation avec transmission du couple dans le sens de rotation (U) des deux corps de bagues de friction (10) et s'étendant à travers un évidement (28) lorsqu'il est disposé sur l'âme (2) d'une roue ferroviaire (1), de préférence, l'au moins un coulisseau (20), lorsqu'il est disposé sur l'âme (2) d'une roue ferroviaire (1), est axial par rapport à l'axe de rotation (A) de la roue ferroviaire (1) et/ou est bloqué contre une rotation autour de son extension axiale au moyen des corps de liaison (13) associés.

11. Frein de roue ferroviaire (100) avec une roue ferroviaire (1), présentant un moyeu de roue (3) et une jante de roue (4) avec une surface de roulement (5), une âme de roue (2) s'étendant entre le moyeu de roue (3) et la jante de roue (4), et un jeu de bagues de friction (200) selon l'une des revendications 8 à 10 étant disposé, lequel est fixé à la roue ferroviaire (1) au moyen des éléments de liaison (16) sur l'âme de roue (2).

12. Frein de roue ferroviaire (100) selon la revendication 11, dans lequel au moins un des éléments de liaison (16) comprend une vis de traction (22) et un contre-écrou (29).

13. Frein de roue ferroviaire (100) selon la revendication 12, comprenant un jeu de bagues de friction (200) selon la revendication 10, dans lequel l'au moins un élément de liaison (16) fixe les deux corps de bagues de friction (10) à l'âme de roue (2).

14. Frein de roue ferroviaire (100) selon la revendication 12 ou 13, dans lequel ledit au moins un élément de liaison (16) s'étend à travers une ouverture de passage (30) dans l'âme de roue (2), et l'ouverture de passage (30) présente une section transversale supérieure à la section transversale de la partie de l'élément de liaison (16) disposée dans la zone de l'ouverture de passage (30).
